# EUROPEAN PATENT APPLICATION

(11) **EP 2 826 439 A1**
(43) Date of publication of application: **21.01.2015**
(21) Application number: 13177122.2
(22) Date of filing: 18.07.2013
(51) Int. Cl.: A61C 1/08

(54) **Method of speedily forming dental implant auxiliary devices**

(71) Applicant: Taiwan Shan Yin International Co., Ltd., Kaohsiung City 806 (TW)
(72) Inventor: Su, Kou-Tsair, Kaohsiung City 806 (TW); Su, Yu-Jung, Kaohsiung City 806 (TW)
(74) Representative: Chaillot, Geneviève

(57) **Abstract**

A method (3) of speedily forming dental implant auxiliary devices comprises a tooth mold reproducing step (31), a processing drawing setting step (32), and a formation step (33). In the tooth mold producing step (31), a buccal mold is made according to a shape of an oral cavity; in the processing drawing setting step (32), an implant marked object is designed in respect to the buccal mold for setting a three-dimensional processing drawing of a dental implant auxiliary device; and in the formation step (33), the drawing is input to a laser sintering and forming system, so that the system directly and quickly forms and shapes the implant fixing device according to the three-dimensional drawing. The method (3) reduces the manufacture time effectively and increases the manufacture precision, which allows the metal implant to be correctly implanted in surgery for enhancing a success rate of the surgery and reducing manufacture costs.

## Description

### BACKGROUND OF THE INVENTION

### 1. Field of the Invention

The present invention relates to a forming method, particular to a method of speedily forming dental implant auxiliary devices.

### 2. Description of the Related Art

An artificial implant cure is usually executed by a doctor who implants a metal tooth root into the jawbone loss of teeth in the oral cavity of the patient to replace the natural tooth root. In the conventional implant technique, the doctor has to bore a hole deep into a bearing point of the alveolar bone, fix a metal implant in the bearing point of the alveolar bone, and install dentures onto the metal implant after the metal implant and the alveolar bone are firmly positioned. Since the doctor usually relies on his own experiences boring the alveolar bone, it may be quite difficult to bore the hole at the widest or most suitable place of the alveolar bone precisely. Therefore, there may be reasons which fail the implant operation, such as a deviation of the boring location when the boring location and angle are not perpendicular to an occlusal surface and an injury to nerves when the boring height is too deep.

A dental implant fixing apparatus has been developed, which is firstly fixed onto the teeth before the implant operation. The doctor bores a slot according to the aperture location of the apparatus and then implants and fixes the metal implant therein.

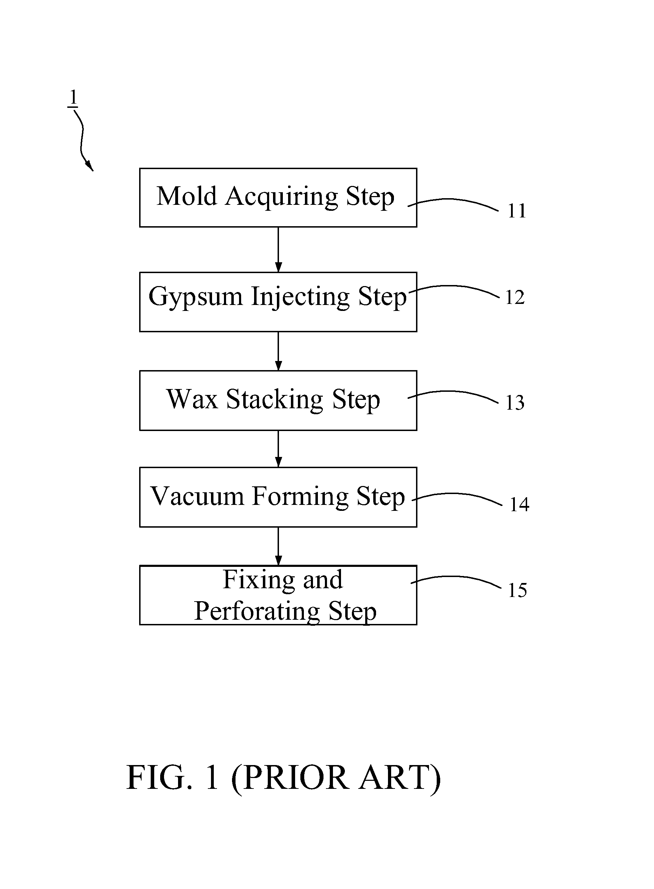

Referring to Fig. **1****,** a method of forming conventional dental implant auxiliary devices comprises a mold acquiring step **11** for checking the gum shape of the patient and getting an initial mold, a gypsum injecting step **12** for injecting gypsum into the initial mold to form a gum mold, a wax stacking step **13** for stacking wax on the gum loss of teeth and making a denture mold, a vacuum forming step **14** for shaping a dental implant auxiliary device according to the gum mold and the denture mold via a vacuum forming technique, and a fixing and perforating step **15** for adhering lead bars onto the aforementioned shaped device, positioning a requisite implant direction via an X-ray, boring a hole on the device, and hence attaining a complete dental implant auxiliary device. However, the conventional method may waste materials in pursuance of manufacture and cause errors and a decrease in the precision since all steps are artificially operated, such as sampling and modifying manually. The method also wastes time and increases costs. Therefore, the method requires improvements.

To develop a digital sampling technique, a Taiwan Patent no. 1368496 titled by "A method of producing the digital implant layout auxiliary elements" and a Taiwan Patent no. 1382831 titled by "Auxiliary device for fixing dental implant" are disclosed. The two arts focus on a rapid reproduction of buccal molds of patients and a computed scanning operation to arrange and simulate a processing drawing, and then process a mold according to the drawing. These prior arts can apply the computer to simulate the sampling and positioning, which increases the speed of practical sampling and positioning and the precision. However, the problem of wasting time and costs in manufacturing still exists as these prior arts mainly adopts a mold injecting forming method which shapes the dental implant auxiliary device by steps, such as wrapping, wax removing, wax injecting, mold acquiring, grinding, polishing, etc. Therefore, these prior arts still require improvements.

### SUMMARY OF THE INVENTION

The object of the present invention is to provide a method of speedily forming dental implant auxiliary devices which efficiently shortens the manufacture time, decreases manufacture costs, and increases the manufacture precision.

The method of speedily forming dental implant devices in accordance with the present invention comprises a tooth mold reproducing step for making a buccal mold by copying a shape of an oral cavity of a patient, a processing drawing setting step for designing a layout of an implant marked object in respect to the buccal mold and building a three-dimensional processing drawing of a dental implant auxiliary device according to the layout, and a formation step for inputting the three-dimensional processing drawing into a laser sintering and forming system, whereby the system rapidly forms and shapes a complete dental implant auxiliary device. Accordingly, the present invention firstly builds the three-dimensional drawings and then applies the laser sintering and forming system to form and shape the dental implant auxiliary device directly according to the drawings, which shortens the manufacturing time and decreases manufacturing costs efficiently. Further, the subject formation step is to directly form and shape a complete device according to the drawing, facilitating an increase of the manufacture precision.

Preferably, the tooth mold reproducing step scans the shape of the oral cavity of the patient by a computed tomography and builds a buccal mold signal stored in a computer.

Preferably, an operation of the laser sintering and forming system includes a drawing inputting step for inputting the three-dimensional processing drawing into the laser sintering and forming system, a drawing slicing step for dividing the three-dimensional processing drawing into a plurality of stacked processing layers, a powder setting step for putting a processing powder on the platform, and a laser-scanning sintering step. The laser sintering device further includes a laser sintering unit and a scraping unit as well as an ascending unit disposed relative to the laser sintering unit respectively, whereby in the laser-scanning sintering step, the laser sintering unit, the scraping unit, and the ascending unit are controlled by the control unit for subjecting the powder to a sintering process according to the processing layers and thence forming and shaping the dental implant auxiliary device directly.

Preferably, the subject method further comprises a surface treatment step executed after the formation step, thereby subjecting a wall of the positioning through hole of the dental implant auxiliary device to a polishing treatment and allowing the wall to be smooth.

The advantages of the present invention over the known prior arts will become more apparent to those of ordinary skilled in the art upon reading the following descriptions in junction with the accompanying drawings.

### BRIEF DESCRIPTION OF THE DRAWINGS

Fig. **1** is a block diagram showing steps of a conventional method;
Fig. **2** is a block diagram showing steps of a first preferred embodiment of the present invention;
Fig. **3** is a block diagram showing the formation step of the present invention; and
Fig. **4** is a block diagram showing a second preferred embodiment of the present invention.

### DETAILED DESCRIPTION OF THE PREFERRED EMBODIMENTS

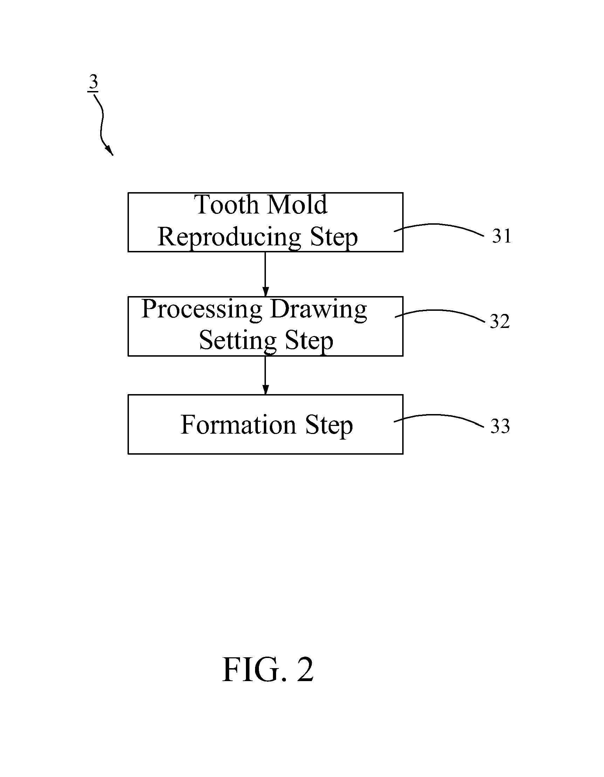

Fig. **2** shows a first preferred embodiment of a method of speedily forming dental implant auxiliary devices **3** of the present invention. The methods **3** comprises a tooth mold reproducing step **31,** a processing drawing setting step **32,** and a formation step **33.** Wherein, the tooth mold reproducing step **31** is applied to make a buccal mold by copying a shape of an oral cavity of a patient. In this step, the shape of an oral cavity of the patient can be preferably scanned by a computed tomography. After capturing the image information of the shape, an image rebuilding software subjects the digital data thereof to a substantial rebuilding in order to make the buccal mold. Alternatively, the shape of the oral cavity can be scanned by the computer after experiencing an artificial occlusion mold and converted into a data of the buccal mold which is further stored in the computer for processing. Further, the processing drawing setting step **32** is applied to design a layout of an implant marked object in respect to the buccal mold. According to the layout, the step **32** builds a three-dimensional processing drawing of a dental implant auxiliary device provided with a positioning through hole in which a positioning direction and a positioning height are included.

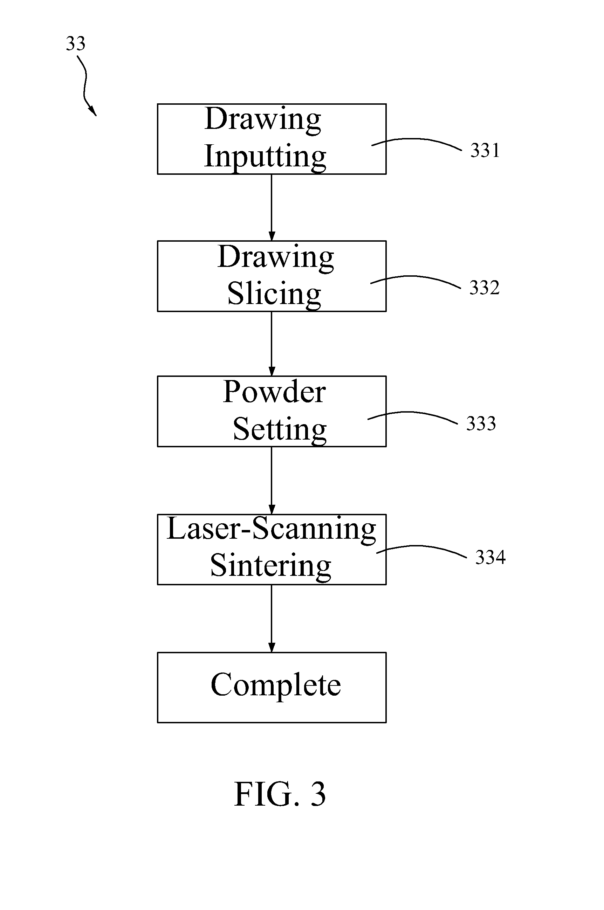

Further, the formation step **33** cooperates with a laser sintering and forming system for forming and shaping the dental implant auxiliary device. The laser sintering and forming system includes a platform, a laser sintering device disposed on the platform, and a control unit disposed to control an operation of the laser sintering device. The laser sintering device further includes a laser sintering unit and a scraping unit as well as an ascending unit disposed relative to the laser sintering unit respectively. Referring to Fig. **3****,** an operation of the laser sintering and forming system comprises a drawing inputting step **331** for inputting the three-dimensional processing drawing into the laser sintering and forming system, a drawing slicing step **332** for dividing the three-dimensional processing drawing into a plurality of stacked processing layers, a powder setting step **333** for putting a processing powder on the platform, and a laser-scanning sintering step **334** for using the control unit to drive operations of the laser sintering unit, the scraping unit, and the ascending unit according to the processing layers and speedily sintering the powder layer by layer to form and shape the dental implant auxiliary device. Furthermore, the non-sintered metal powder can be recycled to streamline the cost. Therefore, by the processing drawing setting step, the three-dimensional processing drawing of a dental implant auxiliary device can be firstly developed, which allows the laser sintering and forming system to form and shape the complete dental implant auxiliary device according to the processing drawing directly and speedily. Different from the technique of the prior art, the present invention streamlines steps of the formation of the dental implant auxiliary device to shorten the manufacture time efficiently. The present invention also increases the manufacture precision to allow the metal implant to be implanted into the correct position in surgery, promote the success rate of the surgery, and decrease the manufacture costs.

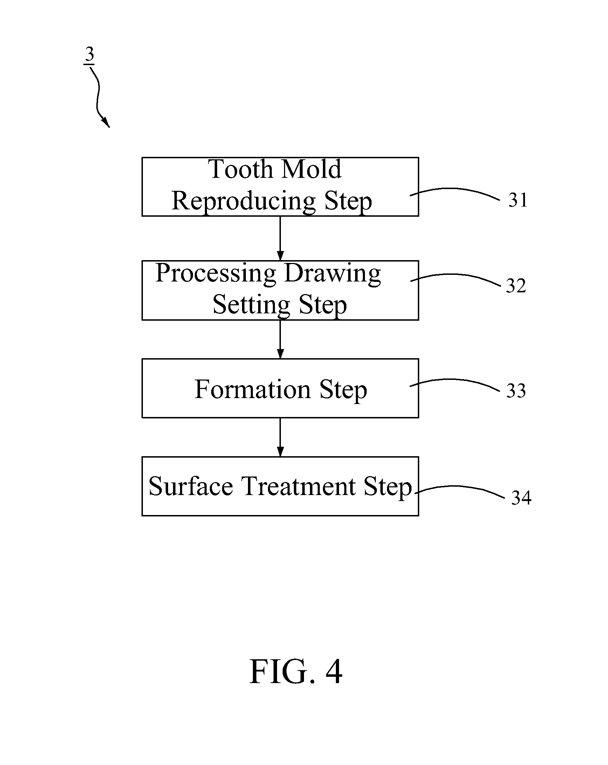

Referring to Fig. **4** shows a second preferred embodiment of a method of speedily forming dental implant auxiliary devices **3** of the present invention, which still comprises a tooth mold reproducing step **31,** a processing drawing setting step **32,** and a formation step **33.** The detail concatenation of correlated elements in the above steps and the objectives and purposes are the same as the first preferred embodiment. To smooth the wall of the positioning through hole of the dental implant auxiliary device, this embodiment is in particular in that a surface treatment step **34** is executed after the formation step **33,** thereby subjecting a wall of the positioning through hole of the dental implant auxiliary device to a polishing treatment and allowing the wall to be more smooth. Alternatively, a hollow ring can be further sleeved on the positioning through hole. In this embodiment, an example that the surface treatment step **34** succeeds the formation step **33** is herein adopted. Accordingly, by means of the surface treatment step **34,** the wall of the positioning through hole is more smooth, which allows the dental implant to penetrate the positioning through hole more easily and facilitates the smoothness of the implanting operation.

To sum up, the present invention designs a layout of the three-dimensional processing drawing of a dental implant auxiliary device firstly and inputs the drawing into a laser sintering and forming system to allow the system to speedily and directly form and shape the complete dental implant auxiliary device according to the drawing in the formation step. Therefore, by having the layout of the three-dimensional processing drawing prior to the formation step, the complete dental implant auxiliary device can be directly formed and shaped according to the processing drawing by the laser sintering and forming system, which shortens the manufacture time efficiently and increases the manufacture precision to allow the metal implant to be implanted into the correct position in surgery, promote the success rate of the surgery, and decrease the manufacture costs.

While we have shown and described the embodiment in accordance with the present invention, it should be clear to those skilled in the art that various modifications may be made in further embodiments described without departing from the spirit and scope of the invention.

## Claims

1. A method (3) of speedily forming dental implant auxiliary devices comprising:
a tooth mold reproducing step (31) for making a buccal mold by copying a shape of an oral cavity of a patient;
a processing drawing setting step (32) for designing a layout of an implant marked object in respect to said buccal mold and building a three-dimensional processing drawing of a dental implant auxiliary device provided with a positioning through hole according to said layout; and
a formation step (33) for forming and shaping said dental implant auxiliary device by using a laser sintering and forming system, wherein said laser sintering and forming system includes a platform, a laser sintering device disposed on said platform, and a control unit disposed to control an operation of said laser sintering device, whereby said control unit converts said three-dimensional processing drawing into a processing value and drives said laser sintering device to form and shape said dental implant auxiliary device after said three-dimensional processing drawing is input to said laser sintering and forming system.

2. The method (3) as claimed in claim 1, wherein said tooth mold reproducing step (31) scans said shape of said oral cavity of said patient by a computed tomography and builds a buccal mold signal stored in a computer.

3. The method (3) as claimed in claim 1, wherein an operation of said laser sintering and forming system comprises a drawing inputting step (331) for inputting said three-dimensional processing drawing into said laser sintering and forming system, a drawing slicing step (332) for dividing said three-dimensional processing drawing into a plurality of stacked processing layers, a powder setting step (333) for putting a processing powder on said platform, and a laser-scanning sintering step (334), said laser sintering device further including a laser sintering unit and a scraping unit as well as an ascending unit disposed relative to said laser sintering unit respectively, whereby in said laser-scanning sintering step (334), said laser sintering unit, said scraping unit, and said ascending unit are operated under an control of said control unit for subjecting said powder to a sintering process according to said processing layers and thence forming and shaping said dental implant auxiliary device directly.

4. The method (3) as claimed in claim 1, further comprising a surface treatment step (34) succeeding said formation step (33), thereby subjecting a wall of said positioning through hole of said dental implant auxiliary device to a polishing treatment and allowing said wall to be smooth.
